Europäisches Patentamt

European Patent Office

Office européen des brevets

(11) Publication number: **0 338 481**

**A2**

# (12) EUROPEAN PATENT APPLICATION

(21) Application number: 89106856.1

(22) Date of filing: 17.04.89

(51) Int. Cl.⁴: **H04R 1/02 , B60R 11/02**

The title of the invention has been amended (Guidelines for Examination in the EPO, A-III, 7.3).

(30) Priority: 22.04.88 IT 2112188 U

(43) Date of publication of application:
**25.10.89 Bulletin 89/43**

(84) Designated Contracting States:
**AT BE CH DE ES FR GB GR IT LI LU NL SE**

(71) Applicant: **ELLE ENNE S.r.l.**
**Via Masina, 5**
**I-20158 Milano(IT)**

(72) Inventor: **Nanetti, Lorenzo**
**Via Monte S. Genesio, 27**
**I-20158 Milano(IT)**

(74) Representative: **Gervasi, Gemma**
**NOTARBARTOLO & GERVASI Srl Viale**
**Bianca Maria 33**
**I-20122 Milan(IT)**

(54) **Folding loudspeaker box.**

(57) A concealed container for the loudspeaker of radios, automobile radios, televisions, internalcommunication equipment and the like, for installation in a housing provided in a flat surface of a means of transport or in a fixed structure, and being in the form of a triangular prism able to rotate within said housing about its edge (A) such that when the apparatus is switched on the face (1) carrying the loudspeaker (2) is exposed, whereas when the apparatus is switched off this face is retracted into said housing, which is thus closed towards the outside by the face (3).

FIG 1

EP 0 338 481 A2

Xerox Copy Centre

# CONCEALED CONTAINER FOR THE LOUDSPEAKER OF RADIOS, AUTOMOBILE RADIOS, TELEVISIONS, INTERNAL COMMUNICATION EQUIPMENT AND THE LIKE.

This invention relates to a concealed container for the loudspeaker of radios, automobile radios, televisions, internal communication equipment and the like.

More particularly, the invention relates to a loudspeaker container installed in a housing provided in a flat surface of the means of transport or in a fixed structure, such that when the apparatus is switched on the loudspeaker emerges, and when the apparatus is switched off the loudspeaker is retracted into its concealed state.

Said container has particular advantages and useful characteristics compared with systems of the known art.

For example the loudspeakers of automobile radios and other apparatus of the known art project beyond the flat surface and are in any event fixed and always exposed.

Because of these characteristics loudspeakers of the known art have various drawbacks, including the following:
- dust and solid and liquid materials handled in its vicinity can deposit on the loudspeaker;
- it may be struck by objects handled in its vicinity;
-it can be damaged by solar radiation;
- as it is permanently exposed, it is easily identified for theft when installed in a vehicle;
- from the aesthetic viewpoint it constitutes a negative element.

These drawbacks are obviated by the concealed container for the loudspeaker of radios, automobile radios, televisions, internal communication equipment and the like according to the present invention, which is installed in a housing provided in a flat surface of a means of transport or in a fixed structure, and is characterised by being in the form of a triangular prism able to rotate within said housing about its edge A such that when the apparatus is switched on the face 1 carrying the loudspeaker 2 is exposed, whereas when the apparatus is switched off this face is retracted into said housing, which is thus closed towards the outside by the face 3.

These and further characteristics and advantages of the container according to the present invention will be more apparent from the detailed description given hereinafter with reference to the accompanying figures, which show a preferred embodiment of the invention by way of non-limiting example.

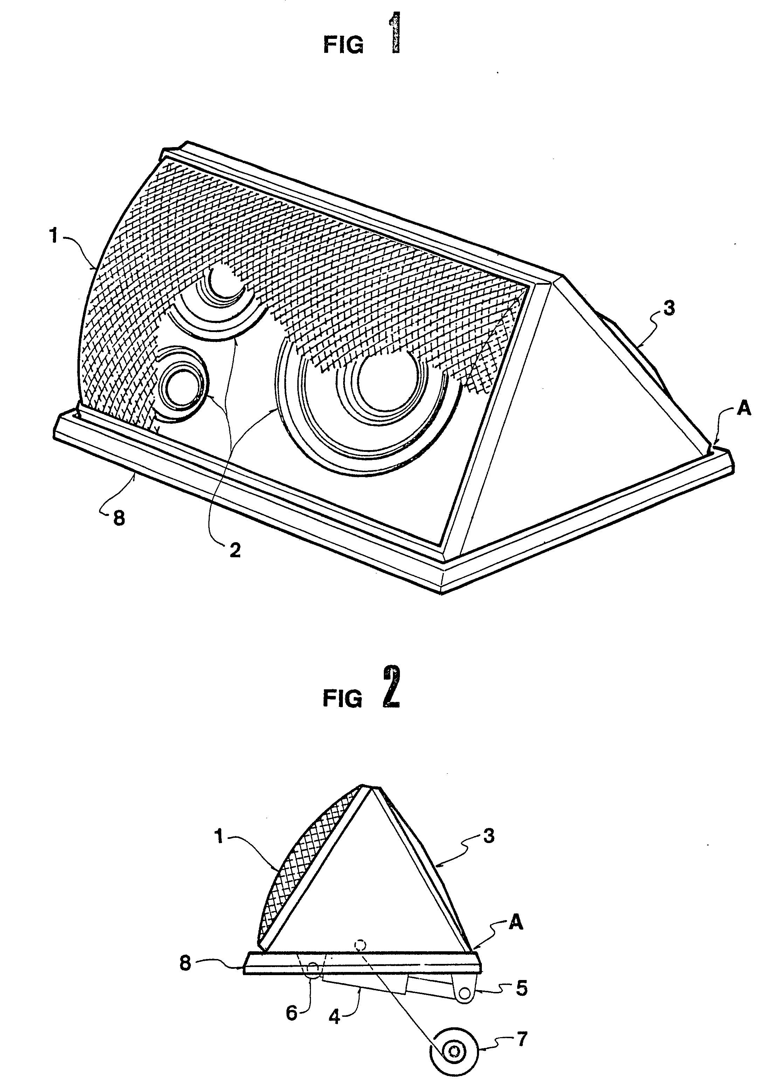

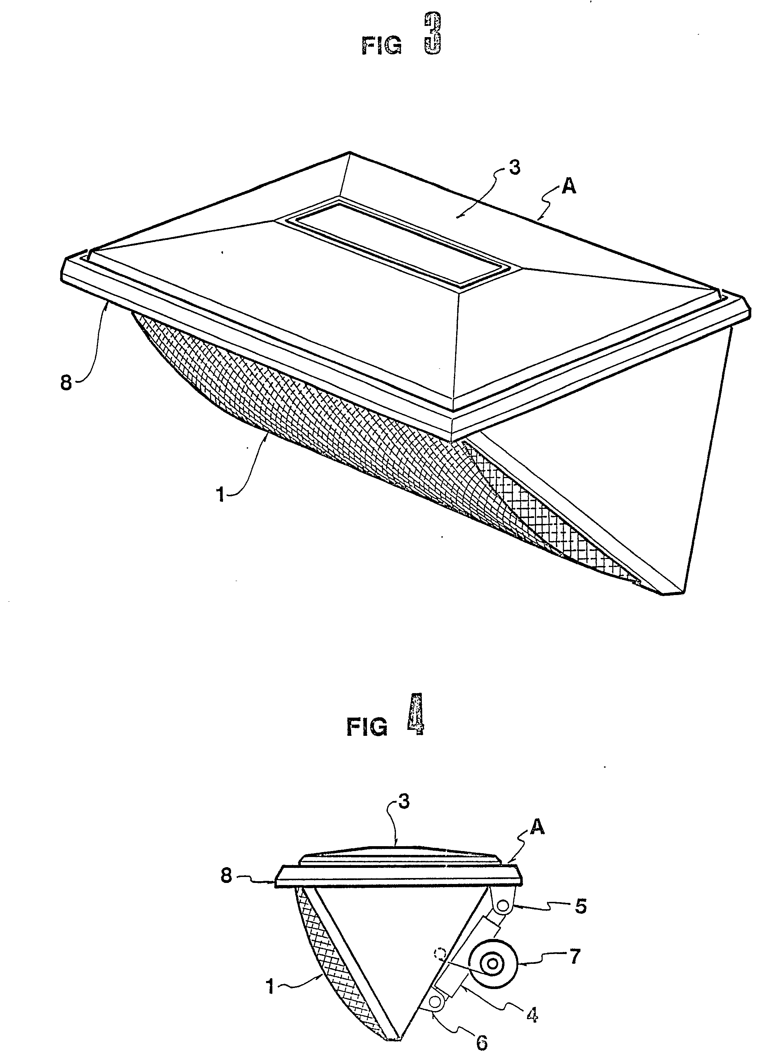

Figures 1 and 2 show the container in the position in which the apparatus is switched on, whereas Figures 3 and 4 show the same container in the position in which the apparatus is switched off.

With reference to the figures and to the various reference numerals and letters thereon, the container according to the invention is in the form of a triangular prism with its faces formed to give a satisfactory appearance.

The loudspeakers 2 are fixed in the face 1. This face is covered with a grille having a suitably perforated surface.

The face 3 has a surface which is either flat or is suitably shaped for the purposes of appearance.

The container is hinged to the frame 8 along the edge A, the frame 8 being fixed to a flat surface inside a means of transport or to a fixed structure.

On rotation about the hinge, the container assumes the following positions:
- on switching-on the apparatus the face 1 is exposed for listening purposes, and assumes the oblique position of Figures 1 and 2 with respect to the frame 8;
- on switching-off the apparatus the face 1 is retracted so that the upper face 3 remains exposed to close the housing towards the outside by assuming a position parallel to its plane of application as in Figures 3 and 4.

The rotation about the edge A, which enables the container to be positioned in the two above positions, can be obtained by various methods, such as an eletric motor powered automatically when the apparatus is switched on, or connected to a switch.

One embodiment of a method for obtaining this rotation is shown in Figures 2 and 4. In this embodiment, on switching-on the apparatus the electric motor acts on the system 4 connected at one end to the bracket 5 fixed to the frame 8 and at its other end to the bracket 6 fixed on the container such as to cause the container to rotate from the position of Figure 4 to the position of Fig. 2; on switching off the apparatus, a spring 7 let the container return from the position of Figure 2 to the position of Figure 4. The container can also be retracted by a hydraulic piston or by operating the motor in the reverse direction.

The rotation can also be obtained by an electric motor rotating a gear wheel on a rack, or by other similar devices. The container according to the invention can be installed in flat surfaces or walls in any arrangement, namely horizontal, vertical or oblique. In each of said applications the face 3 is parallel to the fitting plane when the apparatus is switched off.

All components of the container constructed of moulded plastics material or pressed sheet metal.

From the aforegoing description it is apparent that the invention attains all the proposed objects, and in particular the following is obtained when the apparatus is switched off:
- protection of the loudspeaker from dust and other materials handled in its vicinity;
- usability of the loudspeaker-housing surface which when the apparatus is switched off is practically flat and uniform;
- the loudspeaker is hidden to provide protection against theft;
- protection against impact by objects handled on the flat surface housing the loudspeaker;
- protection against solar radiation;
- a pleasant appearance.

In addition when the apparatus is switched on the loudspeaker can be correctly orientated relative to the listener, and in particular if the container is opened horizontally there is an improvement in stereophonic effect.

## Claims

1. A concealed container for the loudspeaker of radios, automobile radios, televisions, internal communication equipment and the like, which is installed in a housing provided in a flat surface of a means of transport or in a fixed structure, characterised by being in the form of a triangular prism able to rotate within said housing about its edge (A) such that when the apparatus is switched on the face (1) carrying the loudspeaker (2) is exposed, whereas when the apparatus is switched off this face is retracted into said housing, which is thus closed towards the outside by the face (3).

2. A container as claimed in claim 1, characterised in that said face (1) is covered by a grille with a suitably perforated surface.

3. A container as claimed in claim 1, characterised in that said face (3) has a surface which is flat or suitably shaped for the purposes of appearance.

4. A container as claimed in claim 1, characterised in that its edge (A) is hinged to the frame (8), which itself is fixed to a flat surface within a means of transport or to a fixed structure.

5. A container as claimed in claim 1, characterised in that said rotation about the edge (A) is obtained by an electric motor which acts on the system (4) and is either powered automatically when the apparatus is switched on or is connected to a switch.

6. A container as claimed in claim 1, characterised in that its retraction into the housing is obtained by a return spring (7) or hydraulic piston, or by a rack operated by an electric motor.

7. A container as claimed in claim 1, characterised by being installed in a flat surface or wall in any arrangement, i.e. horizontal, vertical or oblique.

8. A container as claimed in claim 1, characterised in that its components are constructed of moulded plastics or of sheet metal.

FIG 1

FIG 2

EP 0 338 481 A2

FIG 3

FIG 4